# EUROPEAN PATENT APPLICATION

(11) **EP 4 678 332 A1**
(43) Date of publication of application: **14.01.2026**
(21) Application number: 24767067.2
(22) Date of filing: 01.03.2024
(51) Int. Cl.: B23Q 17/09, G05B 19/18, G05B 19/4065

(54) **TOOL ABNORMALITY DETECTION SYSTEM**

(30) Priority: 03.03.2023 JP 2023032776; 03.03.2023 JP 2023032777; 20.04.2023 JP 2023069344
(71) Applicant: DENSO CORPORATION, Kariya-city, Aichi 448-8661 (JP)
(72) Inventor: MARUYAMA, Yumi, Kariya-city, Aichi 4488661 (JP); MAWATARI, Kazuaki, Kariya-city, Aichi 4488661 (JP)
(74) Representative: Kuhnen & Wacker Patent- und Rechtsanwaltsbüro PartG mbB
(86) International application number: PCT/JP2024/007818
(87) International publication number: WO 2024/185699

(57) **Abstract**

A tool abnormality detection system includes a detector (10) configured to detect a sound wave generated in processing a workpiece (200) with a tool (140, 410) and output a detection signal based on the sound wave, and a controller (30) configured to generate, based on the detection signal, determination signals indicating intensities in respective frequency bands: a fundamental frequency band of a wear-indicative sound wave; and a higher frequency band that is higher than the fundamental frequency band, and determine whether the tool is worn by comparing each of the determination signals to its respective wear threshold which is set for the respective frequency bands.

## Description

### CROSS REFERENCE TO RELATED APPLICATION

This application is based on Japanese Patent Application No. 2023-032776 filed on March 3, 2023, Japanese Patent Application No. 2023-032777 filed on March 3, 2023, and Japanese Patent Application No. 2023-069344 filed on April 20, 2023, the contents of which are hereby incorporated by reference.

### TECHNICAL FIELD

The present disclosure relates to a tool abnormality detection system.

### BACKGROUND ART

Conventionally, tool abnormality detection systems for detecting abnormalities in a tool used in a machine tool have been proposed (for example, see Patent Document 1). Specifically, the tool abnormality detection system includes a detector that detects sound waves generated during the machining of a workpiece using a tool, and a controller. The controller extracts the intensity of a sound wave in a predetermined frequency band to reduce the influence of noise sound waves caused by ambient noise, and then determines tool abnormalities (i.e., wear) by comparing the intensity in the extracted frequency band with a threshold value. Examples of noise sound waves caused by ambient noise include the voices of workers monitoring the area around the machine tool, operating sounds from other machine tools installed near the target machine tool, and chimes in the factory where the machine tool is located. In addition, sound waves caused by ambient noise further include sound waves generated by other equipment installed on the target machine tool, such as the operating sounds of motors, automatic tool changers (i.e., ATC: Automatic Tool Changer), coolant devices, and oil mist collectors.

### PRIOR ART LITERATURE

### PATENT LITERATURE

Patent Document 1: JP 2007-222997 A

### SUMMARY OF INVENTION

However, even in the tool abnormality detection system as described above, if noise sound waves caused by ambient noise are included in the set frequency band, there is a possibility of erroneously determining a tool abnormality.

It is an object of the present disclosure to provide a tool abnormality detection system that reduces erroneous determination of a tool abnormality.

According to one aspect of the present disclosure, a tool abnormality detection system includes a detector and a controller. The detector is configured to detect a sound wave generated in processing a workpiece with a tool and output a detection signal based on the sound wave. The controller is configured to generate, based on the detection signal, determination signals indicating intensities in respective frequency bands: a fundamental frequency band of a wear-indicative sound wave; and a higher frequency band that is higher than the fundamental frequency band. The wear-indicative sound wave is generated when the tool is worn. The controller is configured to determine whether the tool is worn by comparing each of the determination signals to its respective wear threshold which is set for the respective frequency bands.

Accordingly, the controller generates determination signals for the fundamental frequency band of the wear-indicative sound wave as well as for a higher frequency bands that is higher than the fundamental frequency band. Then, the controller is configured to perform wear determination by comparing each determination signal to the respective wear threshold. Thus, erroneous determination of tool wear can be suppressed.

According to another aspect of the present disclosure, a tool abnormality detection system includes a detector, a controller, and a resonant unit. The detector is configured to detect a sound wave generated in processing a workpiece with a tool and output a detection signal based on the sound wave. The controller is configured to determine whether the tool is worn based on the detection signal. The resonant unit is configured to generate a resonant sound wave by resonating with a wear-indicative sound wave which is generated when the tool is worn. The detector is configured to detect the resonant sound wave generated by the resonant unit. The controller is configured to compare an intensity of a determination signal based on the sound wave detected by the detector to a wear threshold, and determine that the tool is worn upon determining that the intensity of the determination signal is equal to more than the wear threshold.

Accordingly, a resonant unit capable of resonating with wear-indicative sound waves is provided, and the determination signal is based on both the wear-indicative sound waves and the resonance sound waves. Thus, the intensity of the determination signal can be increased and the influence of noise sound waves can be reduced, thereby suppressing erroneous determinations.

It should be noted that the reference numerals in parentheses attached to each component indicate merely one example of correspondence between such components and the specific components described in the embodiments set forth below.

### BRIEF DESCRIPTION OF DRAWINGS

FIG. 1 is a schematic diagram of a tool abnormality detection system according to the first embodiment.
FIG. 2 is a block diagram of a controller.
FIG. 3 is a diagram showing the relationship between frequency and intensity.
FIG. 4 is a flowchart executed by the controller.
FIG. 5 is a schematic diagram of a tool abnormality detection system according to the second embodiment.
FIG. 6 is a schematic diagram of a controller according to the third embodiment.
FIG. 7 is a diagram showing the relationship between frequency and intensity according to the fourth embodiment.
FIG. 8 is a schematic diagram showing the relationship among time, frequency, wear-indicative sound waves, and noise sound waves in another embodiment.
FIG. 9 is a schematic diagram of a tool abnormality detection system according to the fifth embodiment.
FIG. 10 is a block diagram of a controller according to the fifth embodiment.
FIG. 11 is a diagram showing the relationship between frequency and intensity.
FIG. 12 is a schematic diagram of a tool abnormality detection system according to the sixth embodiment.
FIG. 13 is a schematic diagram of a tool abnormality detection system according to the seventh embodiment.

### DESCRIPTION OF EMBODIMENTS

Hereinafter, embodiments of the present disclosure will be described with reference to the drawings. In the following embodiments, parts that are identical or equivalent to each other are denoted by the same reference numerals.

### (First Embodiment)

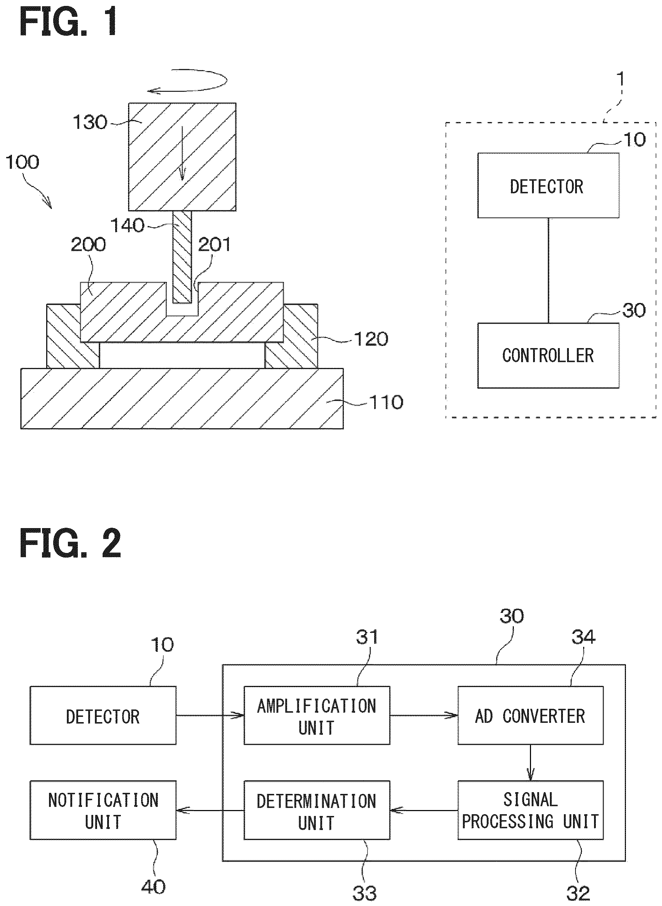

A tool abnormality detection system according to the first embodiment will be described with reference to FIG. 1. The tool abnormality detection system of the present embodiment is used in cutting processes and is configured to detect abnormalities in a tool of a target machine tool. In the present embodiment, an abnormality detection system for detecting abnormalities in a drill used for drilling, which is a type of cutting process performed on a workpiece, will be described as an example.

The target machine tool 100 is, for example, a machining center having a machining chamber. In the present embodiment, the machine tool 100 includes a stage 110, a vise 120 that is placed on the stage 110 and fixes the workpiece 200, a spindle holder 130, and a drill 140 that is mounted on the spindle holder 130 and machines the workpiece 200, among other components. The machine tool 100 forms a hole 201 in the workpiece 200 by displacing the drill 140. It should be noted that, in the present embodiment, the drill 140 corresponds to the tool. In addition, examples of the workpiece 200 include materials used for metal cutting, such as SUS and AL.

The tool abnormality detection system 1 includes a detector 10 and a controller 30.

The detector 10 outputs a detection signal corresponding to a detected sound wave. The detector 10 is formed of a highly waterproof and dustproof sound-collecting microphone or the like, and is arranged near the workpiece 200. It should be noted that the detector 10 of the present embodiment detects processing sound waves generated during the cutting of the workpiece 200, as will be described later. In the present embodiment, the processing sound waves include not only direct sound waves generated directly when the workpiece 200 is being cut by the drill 140, but also wear-indicative sound waves generated when the drill 140 is worn and the workpiece 200 vibrates, as will be described later. In addition, the detection signal is an analog signal.

The controller 30 is constituted by a microcomputer or the like equipped with a CPU, and a storage unit composed of non-volatile physical storage media such as ROM, RAM, flash memory, or HDD. As shown in FIG. 2, the controller 30 of the present embodiment includes an amplification unit 31, an AD converter 34, a signal processing unit 32, and a determination unit 33. It should be noted that CPU stands for Central Processing Unit, ROM stands for Read Only Memory, RAM stands for Random Access Memory, and HDD stands for Hard Disk Drive. Storage media such as ROM are non-transitory tangible storage media.

The amplification unit 31 is connected to the detector 10 and amplifies the detection signal detected by the detector 10. It should be noted that the amplification unit 31 may be connected to the detector 10 by wireless communication or by wired communication. The detection signal transmitted from the detector 10 is a signal based on the processing sound wave. However, the detection signal transmitted from the detector 10 also includes the influence of noise sound waves caused by ambient noise.

The AD converter 34 samples the detection signal amplified by the amplification unit 31 at a predetermined sampling frequency and converts the detection signal, which is an analog signal, into a digital signal. It should be noted that, in the present embodiment, the sampling frequency is set higher than the highest frequency band from which the determination signal is derived by the signal processing unit 32, which will be described later. In addition, the Nyquist frequency, which is half the sampling frequency, is set to be higher than the highest frequency band from which the determination signal is derived by the signal processing unit 32, which will be described later, similarly to the sampling frequency. It should be noted that the highest frequency band from which the determination signal is derived by the signal processing unit 32, which will be described later, is, in other words, the highest frequency band determined by the determination unit 33, which will also be described later. In the present embodiment, the highest frequency band corresponds to a frequency band that is four times higher.

The signal processing unit 32 derives a determination signal indicating the intensity in a predetermined frequency band. The signal processing unit 32 of the present embodiment includes an FFT (Fast Fourier Transform) circuit for performing discrete Fourier transform at high speed and a band-pass filter for deriving a determination signal.

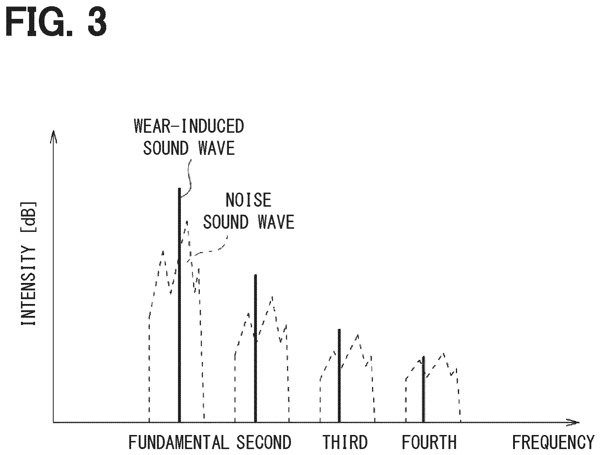

Here, the wear-indicative sound wave includes the fundamental frequency wave and harmonic waves that are integer multiples of two or more of the fundamental frequency. Then, as shown in FIG. 3, the signal processing unit 32 derives multiple determination signals indicating the respective intensities in the different frequency bands. Specifically, the signal processing unit 32 derives a determination signal indicating the intensity in the fundamental frequency band of the wear-indicative sound wave, and determination signals indicating the intensities in frequency bands that are integer multiples of two or more of the fundamental frequency band. The fundamental frequency band is set within a predetermined range that includes the natural frequency of the workpiece 200. The natural frequency of the workpiece 200 is derived in advance through experiments or the like.

Upon receiving the determination signals derived by the signal processing unit 32, the determination unit 33 performs a wear determination, which is an abnormality determination for determining wear of the drill 140, by comparing the intensities of the determination signals to respective wear thresholds. Specifically, as described above, the signal processing unit 32 derives determination signals for multiple different frequency bands. In this case, since the inclusion of harmonics differs between the wear-indicative sound wave and the noise sound wave, the proportion of noise sound waves affecting the determination signals also differs between the determination signals, as shown in FIG. 3. Thus, the determination unit 33 performs a wear determination, which is an abnormality determination for determining wear of the drill 140, by comparing the intensity of the determination signal in each frequency band to the respective wear threshold.

For example, in this embodiment, the determination unit 33 compares the intensities of the determination signals with the respective wear threshold in the fundamental frequency band, the second harmonic frequency band, the third harmonic frequency band, and the fourth harmonic frequency band. In other words, the signal processing unit 32 of the present embodiment derives determination signals for the fundamental frequency band, the second harmonic frequency band, the third harmonic frequency band, and the fourth harmonic frequency band. It should be noted that the intensities of the harmonics decrease as the multiple increases. Thus, the wear threshold is set for each frequency band, and the threshold is made smaller as the frequency increases. Then, in the present embodiment, the determination unit 33 determines that the drill 140 is worn when the intensities of the determination signals in all frequency bands is equal to or greater than the respective wear thresholds. However, the determination unit 33 may alternatively be configured to determine that the drill 140 is worn upon determining that the intensities of the determination signals in a predetermined proportion of the frequency bands is equal to or greater than the respective wear thresholds. In this way, by comparing the determination signals to the respective wear thresholds in multiple frequency bands, it is possible to suppress erroneous wear determination of the drill 140.

In addition, in the present embodiment, when the determination unit 33 determines that the drill 140 is worn based on the wear determination, the determination unit 33 subsequently performs a breakage determination to determine whether the intensity of the determination signal is below a breakage threshold that is smaller than the wear threshold after the wear determination. Specifically, when the drill 140 is damaged, the friction between the drill 140 and the workpiece 200 decreases, resulting in a reduction of wear-indicative sound waves and a decrease in the intensities of the determination signals. Thus, when the intensities of the determination signals fall below the respective breakage thresholds, the determination unit 33 determines that the drill 140 is broken. Similar to the wear threshold, the breakage threshold is set for each frequency band, and is made smaller as the frequency increases. The determination unit 33 then compares the intensity of the determination signal in each frequency band to the corresponding breakage threshold to determine whether the drill 140 is broken. In this embodiment, the drill 140 is determined to be broken in the breakage determination upon determining the intensities of the determination signals in all frequency bands are below the respective breakage thresholds, similar to the wear determination. However, the determination unit 33 may alternatively be configured to determine that the drill 140 is broken upon determining that the intensities of the determination signals in a predetermined proportion of the frequency bands are below the corresponding breakage thresholds.

The determination unit 33 of the present embodiment is connected to a notification unit 40, which includes a display unit, an audio unit, or the like. When the determination unit 33 determines that an abnormality such as wear or breakage has occurred in the drill 140, the determination unit 33 transmits an abnormality signal indicating that an abnormality has occurred in the drill 140 to the notification unit 40. In this embodiment, when the determination unit 33 determines that the drill 140 is worn, the determination unit 33 transmits a wear abnormality signal to the notification unit 40. When the determination unit 33 determines that the drill 140 is broken, the determination unit transmits a breakage abnormality signal to the notification unit 40. The notification unit 40 then notifies an operator that an abnormality has occurred in the drill 140 by providing a notification corresponding to the content of the abnormality signal.

The determination unit 33 may operate independently of the numerical control device (i.e., NC device) that is generally provided in the machine tool 100. The determination unit 33 may be configured to transmit the abnormality signal to the numerical control device. When the determination unit 33 transmits the abnormality signal to the numerical control device, the numerical control device may reset parameters such as the set movement direction or movement amount based on the wear of the drill 140.

The above describes the configuration of the tool abnormality detection system 1 according to the present embodiment. Next, an abnormality detection method using the above-mentioned tool abnormality detection system 1 will be described. In the present embodiment, as described above, an abnormality detection method during drilling of the workpiece 200 using the drill 140 will be explained.

First, when performing drilling on the workpiece 200, the workpiece 200 is fixed in the vise 120, and the spindle holder 130 is rotated and displaced downward to press the drill 140 against the workpiece 200, thereby forming a hole 201 in the workpiece 200. As drilling continues and the tip of the drill 140 becomes worn, contact friction between the tip of the drill 140 and the workpiece 200 increases at the bottom of the hole 201, resulting in an increase in cutting resistance.

When contact friction increases, it becomes difficult for the spindle holder 130, which rotates and moves the drill 140 downward, to operate properly. As a result, the spindle holder 130 undergoes slight vibrations, causing the drill 140 to rub against the side wall of the hole 201 as well. When the drill 140 rubs against the side wall of the hole 201, the workpiece 200 begins to undergo free vibration caused by its natural frequency. In other words, when the drill 140 becomes worn, wear-indicative sound waves are generated from the workpiece 200 as a result of the wear of the drill 140.

The detector 10 detects sound waves and outputs detection signals. Specifically, when the drill 140 is not worn, the detector 10 detects direct sound waves and noise sound waves. When the drill 140 is worn, the detector 10 detects not only direct sound waves and noise sound waves, but also wear-indicative sound waves, and transmits detection signals.

Then, the determination unit 33 compares the intensities of the determination signals based on the detection signals with respective wear thresholds, and determines whether the drill 140 is worn. In this case, in the present embodiment, wear determination is performed by comparing the intensity of the determination signal in each frequency band with the respective wear threshold. Thus, it is possible to prevent erroneous wear determination of the drill 140, which is caused by noise sound waves. In addition, when the determination unit 33 determines that the drill 140 is worn, the determination unit 33 performs the breakage determination by comparing the intensities of the determination signals to the breakage thresholds.

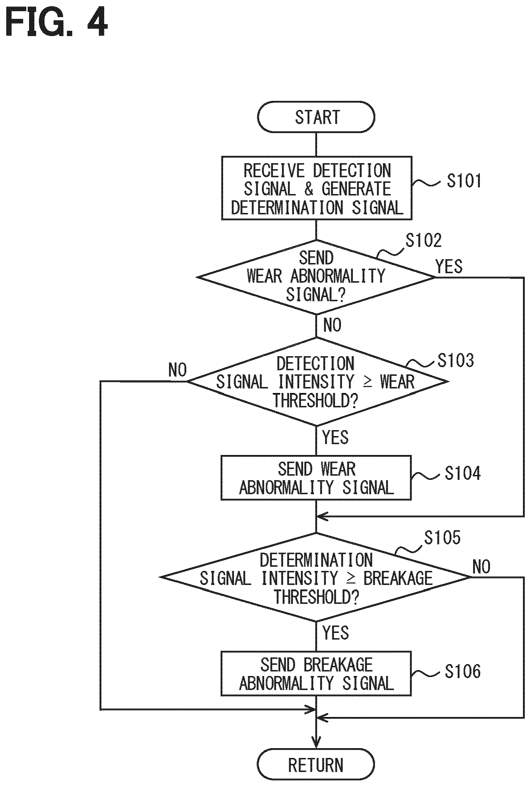

The above is the abnormality detection method according to the present embodiment. Next, the operation executed by the controller 30 will be described with reference to FIG. 4. The controller 30 may execute the following operations when machining of the workpiece 200 is started.

First, in step S101, the controller 30 receives detection signals from the detector 10 and generates determination signals. In the present embodiment, in addition to the fundamental frequency band of the wear-indicative sound waves, the controller 30 generates determination signals for the frequency bands of harmonics that are integer multiples of two or more times the fundamental frequency.

Next, in step S102, the controller 30 determines whether a wear abnormality signal has been transmitted. In other words, the controller 30 determines whether the controller 30 has already determined that the drill 140 is worn. When the controller 30 determines that a wear abnormality signal has been transmitted (that is, step S102: YES), the controller 30 proceeds to the processing from step S105 onward, which will be described later.

When, in step S102, the controller 30 determines that a wear abnormal signal has not been transmitted yet (that is, step S102: NO), the controller 30, in step S103, determines whether the intensities of the determination signals are equal to or greater than the respective wear thresholds. Specifically, the wear determination is performed by comparing the intensity of the determination signal in each frequency band with the respective wear threshold.

When the controller 30 determines that the intensity of the determination signal is less than its wear threshold (that is, step S103: NO), the controller 30 concludes that the drill 140 is not worn and terminates the process. In contrast, when the controller 30 determines that the intensities of the determination signals are equal to or greater than the wear thresholds (that is, step S103: YES), the controller 30 transmits a wear abnormality signal to the notification unit 40 in step S104. As a result, the notification unit 40 performs processing to notify the operator that wear has occurred in the drill 140. In this embodiment, the controller 30 determines that the drill 140 is worn upon determining that the intensities of the determination signals in all frequency bands are equal to or greater than the respective wear thresholds in step 103.

After transmitting the wear abnormality signal in step S104, or when it is determined in step S102 that the wear abnormality signal has been transmitted (that is, step S102: YES), the controller 30 determines in step S105 whether the intensities of the determination signals are equal to or less than the respective breakage thresholds. Specifically, the breakage determination is performed by comparing the intensity of the determination signal in each frequency band with its breakage threshold.

When the controller 30 determines that the intensities of the determination signals are equal to or less than the respective breakage thresholds (that is, step S105: YES), the controller determines that the drill 140 is broken and transmits a breakage abnormality signal to the notification unit 40. As a result, the notification unit 40 performs processing to notify the operator that breakage has occurred in the drill 140. In contrast, when the controller 30 determines that the intensity of the determination signal is greater than the breakage threshold (that is, step S105: NO), the process is terminated. In this embodiment, the controller 30 determines that the drill is broken upon determining that the intensities of the determination signals in all frequency bands are equal to or less than the respective breakage thresholds in step 105.

According to the present embodiment described above, determination signals are generated for a fundamental frequency band of the wear-indicative sound wave and for two or more integer-multiple frequency bands of the fundamental frequency band. Then, wear determination is performed by comparing each determination signal with the respective wear threshold. Thus, it is possible to suppress erroneous wear determination of the drill 140. Furthermore, since the tool abnormality detection system 1 of the present embodiment can suppress erroneous determinations by performing determinations for each frequency band, the tool abnormality detection system 1 of the present embodiment can also be applied in cases where the diameter of the hole 201 is small or where the wear-indicative sound wave is weak due to the material of the workpiece 200.

### (Modification of the First Embodiment)

A modification of the above first embodiment will be described. In the above first embodiment, an example was described in which the controller 30 performs the processing from step S105 onward after sending a wear abnormality signal in step S104. However, the controller 30 may be configured to perform the processing from step S105 onward after the wear abnormality signal has been transmitted multiple times.

### (Second Embodiment)

The second embodiment will be described. This embodiment differs from the first embodiment in that the tool abnormality detection system is configured to detect abnormalities of a tool during turning, which is a type of cutting process. Other aspects are the same as in the first embodiment, and thus a detailed explanation will be omitted here.

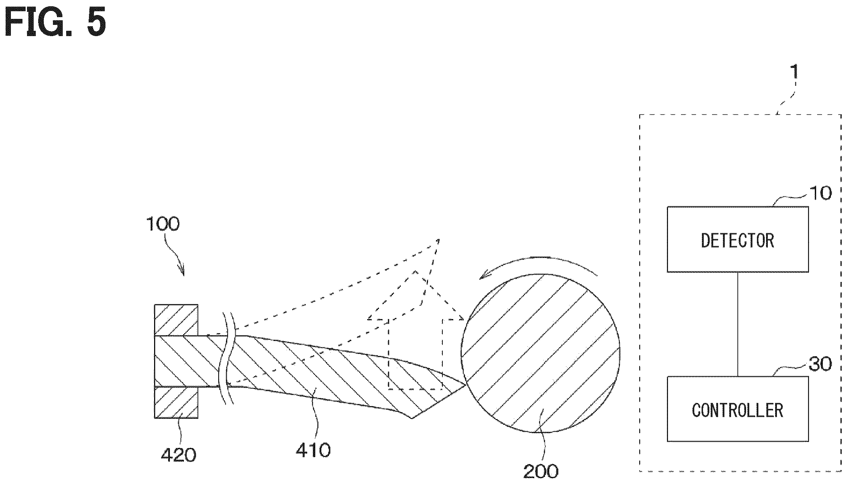

The tool abnormality detection system 1 of the present embodiment is configured to detect abnormalities in a tool used for turning, which is a type of cutting process. Thus, as shown in FIG. 5, a machine tool 100 of the present embodiment includes a cutting tool 410 for turning the workpiece 200 and a vise 420 for holding the cutting tool 410. The cutting tool 410 is rod-shaped, with one end formed as a cutting edge, and the opposite end fixed by the vise 420.

Specifically, as will be described later, in this embodiment, when the cutting edge of the cutting tool 410 becomes worn, the cutting tool 410 vibrates at its natural frequency, generating a wear-indicative sound wave. Thus, the detector 10 is arranged near the cutting tool 410. It should be noted that FIG. 5 shows a state in which the cutting tool 410 is worn and vibrating.

The controller 30, as in the first embodiment, compares the determination signals with the wear thresholds to determine wear. In addition, the controller 30 compares the determination signals with the breakage thresholds to determine breakage. However, in this embodiment, the controller 30 (that is, the signal processing unit 32) is configured such that the frequency band serving as the fundamental frequency band of the wear-indicative sound wave is set to a predetermined range that includes the natural frequency of the cutting tool 410. Then, as in the first embodiment, the controller 30 compares the determination signal for each frequency band with its wear threshold and breakage threshold to determine whether an abnormality occurs.

The above describes the configuration of the tool abnormality detection system 1 according to the present embodiment. Next, an abnormality detection method using the above-mentioned tool abnormality detection system 1 will be described. In this embodiment, as described above, the abnormality detection method during turning of the workpiece 200 using the cutting tool 410 will be explained.

First, during turning processing, the rotating workpiece 200 is brought into contact with the cutting tool 410 to shape the workpiece 200 into the desired form. In this case, as turning processing continues and the cutting edge of the cutting tool 410 becomes worn, the contact friction between the cutting edge and the workpiece 200 increases, resulting in higher turning resistance. Then, when the force balance between the cutting tool 410 and the workpiece 200 is lost and the relative velocity becomes zero, the cutting tool 410 undergoes a stick-slip phenomenon. Then, the cutting tool 410 starts freely vibrating due to its natural vibration due to spring force generated when the cutting tool 410 returns to its original position. In other words, when the cutting tool 410 becomes worn, a wear-indicative sound wave is generated from the cutting tool 410.

It should be noted that the stick-slip phenomenon refers to an intermittent motion that occurs when two contacting objects slide against each other, where instead of a continuous smooth sliding motion, sliding and sticking alternately take place.

The detector 10 detects direct sound waves and noise sound waves when the cutting tool 410 is not worn, and when the cutting tool 410 is worn, the detector 10 detects not only direct sound waves and noise sound waves, but also wear-indicative sound waves, and transmits detection signals.

Then, as in the first embodiment described above, the controller 30 determines abnormalities of the cutting tool 410 by comparing the intensities of the determination signals based on the detection signals to the respective wear thresholds and the damage thresholds.

According to the present embodiment described above, since the determination signal is generated not only for the fundamental frequency band of the wear-indicative sound wave but also for the frequency bands of harmonics that are integer multiples of two or more, the same effects as those of the first embodiment can be obtained.

### (Third Embodiment)

The third embodiment will be described. This embodiment differs from the first embodiment in that the configuration of the controller 30 has been modified. Other aspects are the same as in the first embodiment, and thus a detailed explanation will be omitted here. It should be noted that, in this embodiment, the wear determination described in the first embodiment will be explained, but it is also possible to perform breakage determination.

The controller 30 of the embodiment determines the wear of the drill 140 using self-learning of the abnormality detection system in JP 2020-129233 A which has been already filed by the present applicant.

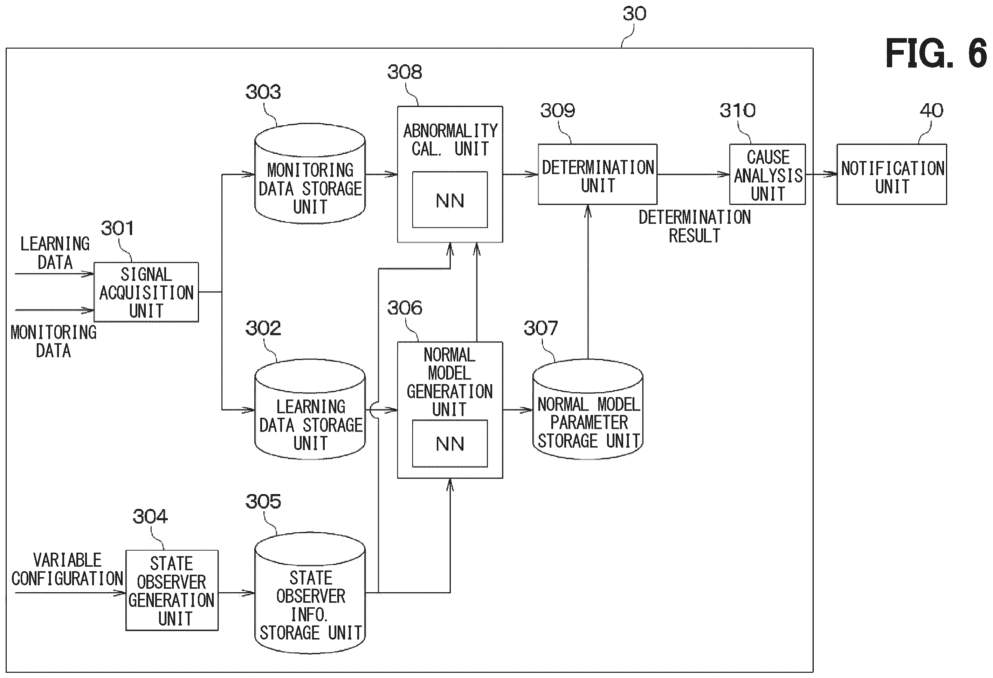

As shown in FIG. 6, the controller 30 of the embodiment includes a signal acquisition unit 301, a learning data storage unit 302, a monitoring data storage unit 303, a state observer generation unit 304, a state observer information storage unit 305, a normal model generation unit 306, a normal model parameter storage unit 307, an abnormality degree calculation unit 308, a determination unit 309, and a cause analysis unit 310.

The signal acquisition unit 301 acquires learning data and monitoring data. In this embodiment, the detection signal based on the sound waves detected by the detector 10 is acquired as the monitoring data and learning data.

It is also possible to acquire the learning data not from the detection signal, but by downloading the learning data from a database storing reference values. Furthermore, in this embodiment, the monitoring data may be any data to be monitored, regardless of whether the monitoring data is used for other purposes. The monitoring data may be used as learning data. In addition, in this embodiment, the learning data may be any data used for learning, and it is optional whether the learning data is used for other purposes.

The learning data storage unit 302 stores the learning data acquired by the signal acquisition unit 301. The stored learning data is then input to the normal model generation unit 306, which will be described later.

The monitoring data storage unit 303 stores the monitoring data acquired by the signal acquisition unit 301. The stored monitoring data is then input to the abnormality degree calculation unit 308, which will be described later.

It is assumed that the learning data storage unit 302 and the monitoring data storage unit 303 are configured using an HDD, flash memory, or the like, but they may also be configured using RAM or the like. Furthermore, the learning data storage unit 302 and the monitoring data storage unit 303 may be implemented using volatile memory or non-volatile memory.

The state observer generation unit 304 generates a state observer using variables included in the input variable configuration. It should be noted that the state observer is a value that includes a predetermined coefficient generated by linearly combining the variables included in the input variable configuration according to a preset formula. It is also preferable that the state observer reflects the condition of the drill 140, for which abnormalities are detected by the tool abnormality detection system 1, and more preferably, the state observer reflects the wear of the drill 140. In this embodiment, the variables refer to the variables corresponding to the learning data and monitoring data acquired by the signal acquisition unit 301, and the variable configuration refers to a single variable or a combination of multiple variables.

The state observer information storage unit 305 stores the coefficients of the state observer obtained by the state observer generation unit 304. In addition, the variable configuration used to generate the state observer is also stored at the same time.

It should be noted that the state observer generation unit 304 only needs to be provided when generating the state observer. That is, after the state observer generation unit 304 has generated the state observer and stored the variable configuration and coefficients of the state observer in the state observer information storage unit 305, the state observer generation unit 304 may be disconnected from the controller 30.

The normal model generation unit 306 derives a first state observation value by inputting the learning data into the state observer. In the present embodiment, the variable configuration and coefficients of the state observer are read from the state observer information storage unit 305, and the first state observation value is obtained by applying the learning data, which is read from the learning data storage unit 302, to the variables. Then, the normal model generation unit 306 generates a normal model by combining the derived first state observation value and the learning data, and inputting them into a competitive neural network (i.e., NN). For example, in the present embodiment, the material of the drill 140, the diameter of the hole, and the like are input as learning data into the competitive neural network (NN).

It should be noted that, as initial values given to the competitive neural network, for example, when there are multiple combinations of attributes of the input data, such as measurement season or time of day, it is desirable that the sampling be performed evenly or randomly. As a result, the convergence of the neuron weight vectors during learning in the competitive neural network can be accelerated on the map.

Here, the competitive neural network is a network including only an input layer and an output layer. The competitive neural network is composed of multiple input layer neurons and multiple output layer neurons that are fully connected to the input layer neurons.

Then, the normal model generation unit 306 calculates an abnormality degree, which is the difference between the learning target data and the first state observation value, which are input to the competitive neural network, and the neuron weight data of the winner unit, and determines a wear threshold using the set of differences. For example, a constant multiple of the 99.9th percentile of the set of differences (i.e., absolute values) is used as the wear threshold. It should be noted that the wear threshold is set not only for the fundamental frequency band of the wear-indicative sound wave, but also for each frequency band of harmonics that are integer multiples of two or more of the fundamental frequency.

The normal model parameter storage unit 307 stores the wear threshold determined by the normal model generation unit 306.

The abnormality degree calculation unit 308 derives a second state observation value by inputting the monitoring data into the state observer. In this embodiment, the variable configuration and coefficients of the state observer are read from the state observer information storage unit 305, and the monitoring data read from the monitoring data storage unit 303 are applied to these variables to obtain the second state observation value. Then, the abnormality degree calculation unit 308 calculates the abnormality degree by combining the derived second state observation value and the monitoring data, inputting them into a competitive neural network (i.e., NN), and using the weight data of the output layer neurons. It should be noted that the abnormality degree is calculated for the fundamental frequency, which is the basis of the wear-indicative sound wave, as well as the harmonic frequency bands that are integer multiples of two or more of the fundamental frequency. In this embodiment, for example, material of the drill 140, hole diameter, and other are input into the competitive neural network (NN) as monitoring data.

The determination unit 309 performs wear determination by comparing the wear threshold read from the normal model parameter storage unit 307 to the abnormality degree output from the abnormality degree calculation unit 308. Specifically, when the abnormality degree is equal to or greater than the wear threshold, it is determined that the drill 140 is worn. When the abnormality degree is less than the wear threshold, it is determined that there is no wear.

When the determination result of the determination unit 309 indicates wear, the cause analysis unit 310 identifies the cause of the wear using the second state observation values and monitoring data that led to the determination of the wear. In this case, the cause analysis unit 310 may identify the cause of the abnormality by using the second state observation values and monitoring data that are obtained earlier and/or later than the second state observation values and monitoring data that led to the determination of the wear as the reference.

According to the present embodiment described above, since the determination signal is generated not only for the fundamental frequency band of the wear-indicative sound wave but also for the frequency bands of harmonics that are integer multiples of two or more, the same effects as those of the first embodiment can be obtained.
(1) As in the present embodiment, the controller 30 may perform wear determination of the drill 140 while self-learning. Accordingly, since wear determination can be performed in accordance with the situation, further suppression of erroneous determinations can be expected.

### (Fourth Embodiment)

The fourth embodiment will be described. The present embodiment differs from the first embodiment in that the sampling frequency and the Nyquist frequency have been changed. Other aspects are the same as in the first embodiment, and thus a detailed explanation will be omitted here.

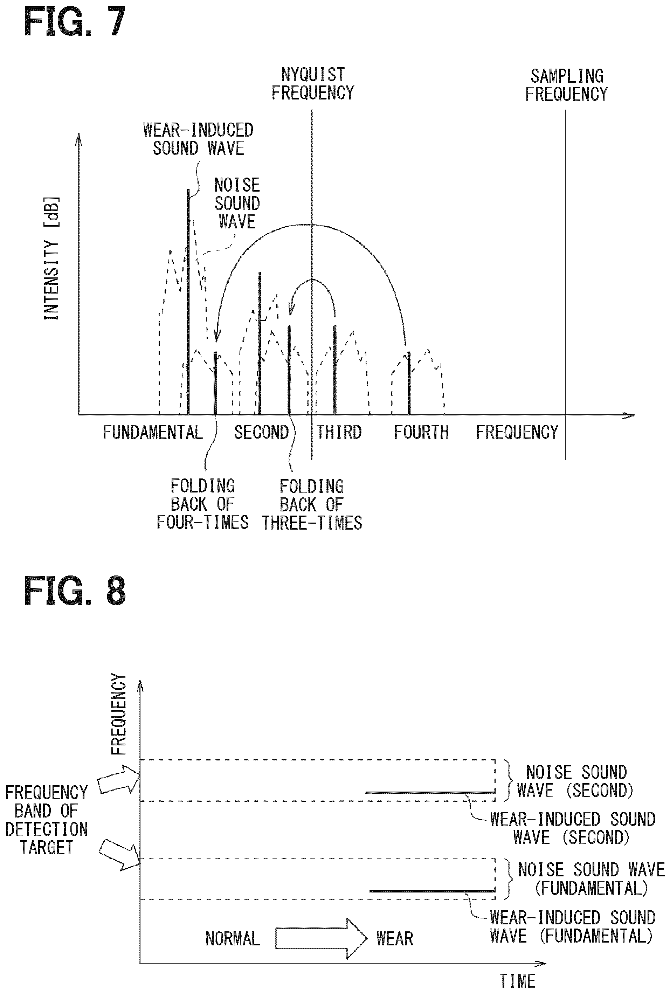

The basic configuration of the present embodiment is the same as that of the above-mentioned first embodiment. In this embodiment, the sampling frequency and Nyquist frequency of the AD converter 34 have been changed. Specifically, the sampling frequency is set higher than the highest frequency band determined by the determination unit 33, whereas the Nyquist frequency is set to a frequency that falls within the range of the frequency bands determined by the determination unit 33. In this embodiment, as shown in FIG. 7, the sampling frequency is set higher than four times the frequency band, and the Nyquist frequency is set to a frequency between twice and three times the frequency band.

Here, "the Nyquist frequency is included within the range of the frequency bands determined by the determination unit 33" means, in this embodiment, that the Nyquist frequency is set to a frequency between the fundamental frequency band and four times the fundamental frequency band. However, as described above, the sampling frequency is set higher than the highest frequency band determined by the determination unit 33. Thus, in practice, the Nyquist frequency is appropriately set according to the highest frequency band determined by the determination unit 33.

Then, when converting the detection signal from an analog signal to a digital signal, the AD converter 34 generates a digital signal which includes frequency components higher than the Nyquist frequency as folding distortion. In this embodiment, since the Nyquist frequency is set to a frequency between the two-times frequency band and the three-times frequency band, the signals converted into digital signals include detection signals corresponding to the three-times and four-times frequency bands as folding distortion. Hereinafter, the frequency band resulting from the folding back of the three-times frequency band is also referred to as the "three-times folding frequency band," and the frequency band resulting from the folding back of the four-times frequency band is also referred to as the "four-times folding frequency band."

The signal processing unit 32 derives multiple determination signals indicating the intensity in each of the different frequency bands. However, in this embodiment, as described above, the detection signals in the three-times and four-times frequency bands are folded back at the Nyquist frequency. Thus, the signal processing unit 32 derives determination signals for the fundamental frequency band, the two-times frequency band, the three-times folding frequency band, and the four-times folding frequency band. In other words, the signal processing unit 32 of this embodiment derives determination signals for the three-times folding frequency band and the four-times folding frequency band instead of deriving determination signals for the three-times frequency band and the four-times frequency band.

The determination unit 33 compares the intensities of the determination signals to the respective wear thresholds in the wear determination process. However, in this embodiment, as described above, the signal processing unit 32 derives determination signals for the fundamental frequency band, the two-times frequency band, the three-times folding frequency band, and the four-times folding frequency band. Thus, the determination unit 33 compares the intensities of the determination signals to the respective wear thresholds in the fundamental frequency band, the two-times frequency band, the three-times folding frequency band, and the four-times folding frequency band.

In addition, in the breakage determination process, the determination unit 33 compares the intensities of the determination signals with the breakage thresholds in the same manner as in the wear determination process. That is, the intensities of the determination signals are compared to the respective breakage thresholds in the fundamental frequency band, the two-times frequency band, the three-times folding frequency band, and the four-times folding frequency band.

According to the present embodiment described above, since determination signals are generated not only for the fundamental frequency band of the wear-indicative sound wave but also for the frequency bands of its harmonics, it is possible to obtain the same effects as in the first embodiment.
(1) In the present embodiment, the sampling frequency is set higher than the highest frequency band determined by the determination unit 33, and the Nyquist frequency is set to a frequency included within the range of the frequency bands determined by the determination unit 33. Then, signal components at frequencies higher than the Nyquist frequency appear as folding distortion, which are symmetrically folded back about the Nyquist frequency. Thus, by deriving the determination signals from the folding distortion, the signal processing unit 32 can derive a determination signal equivalent to that which would be obtained if it were derived from signal components at frequencies higher than the Nyquist frequency. Accordingly, the range of the frequency bands for generating the determination signals and for determining the determination signals can be narrowed. As a result, the computational load can be reduced. The communication of the determination signals, the wear determination result, and the breakage determination result are performed using digital signals. In this embodiment, the range of the frequency bands for deriving the determination signals and for determining the determination signals can be narrowed, thereby reducing the number of bits required to represent the digital signals. Thus, the amount of data required for processing can be reduced, and responsiveness can also be improved.

### (Fifth Embodiment)

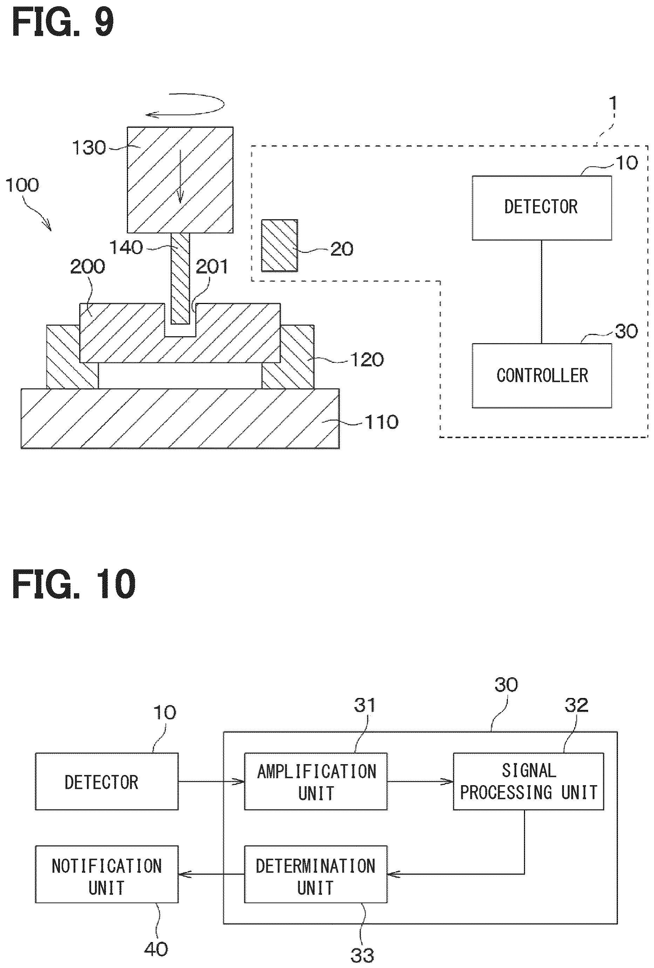

The tool abnormality detection system according to the fifth embodiment will be described with reference to FIG. 9. The tool abnormality detection system of the present embodiment is used in cutting processes and is configured to detect abnormalities in a tool of a target machine tool. In the present embodiment, an abnormality detection system for detecting abnormalities in a drill used for drilling, which is a type of cutting process performed on a workpiece, will be described as an example.

The target machine tool 100 is, for example, a machining center having a machining chamber. In the present embodiment, the machine tool 100 includes a stage 110, a vise 120 that is placed on the stage 110 and fixes the workpiece 200, a spindle holder 130, and a drill 140 that is mounted on the spindle holder 130 and machines the workpiece 200, among other components. The machine tool 100 forms a hole 201 in the workpiece 200 by displacing the drill 140. It should be noted that, in the present embodiment, the drill 140 corresponds to the tool. In addition, examples of the workpiece 200 include materials used for metal cutting, such as SUS and AL.

The tool abnormality detection system 1 includes a detector 10, a resonant unit 20, a controller 30.

The detector 10 outputs detection signals corresponding to the detected sound waves, and is formed of a highly waterproof and dustproof sound-collecting microphone or the like. The detector 10 is arranged near the workpiece 200 and the resonant unit 20, which will be described later. It should be noted that the detector 10 of the present embodiment detects the machining sound waves generated during the cutting of the workpiece 200, as well as the resonance sound waves generated from the resonant unit 20, as will be described later. In the present embodiment, the processing sound waves include not only direct sound waves generated directly when the workpiece 200 is being cut by the drill 140, but also wear-indicative sound waves generated when the drill 140 becomes worn and the workpiece 200 vibrates, as will be described later.

The resonant unit 20 is configured to resonate in response to the wear-indicative sound waves generated when the drill 140 is worn and the workpiece 200 vibrates. Specifically, the resonant unit 20 is configured to have the same natural frequency as the workpiece 200 so that the resonant unit 20 can resonate with the wear-indicative sound waves. For example, the resonant unit 20 may be made of the same material as the workpiece 200 and have the same shape. In this case, for example, the resonant unit 20 may be the workpiece 200 before the drilling process is performed. Alternatively, the resonant unit 20 may be the workpiece 200 after the drilling process has been performed. However, the resonant unit 20 does not necessarily have to be made of the same material as the workpiece 200, nor does the resonant unit 20 have to have the same shape as the workpiece 200 as long as the resonant unit 20 is configured to resonate with the wear-indicative sound waves. The natural frequency of the workpiece 200 or the resonant unit 20 may be determined, for example, by structural simulation or the impulse hammer method. However, if the shape is simple, such as a rectangular parallelepiped, the natural frequency may also be derived based on mechanical engineering formulas or the like.

The resonant unit 20 is arranged at a position where the resonant unit 20 can resonate with the wear-indicative sound waves. For example, the resonant unit 20 is arranged near the workpiece 200, but the resonant unit 20 may also be disposed inside the detector 10, the stage 110, the vise 120, the spindle holder 130, or the drill 140. The resonant unit 20 resonates with the wear-indicative sound waves and generates resonance sound waves having frequency components equivalent to those of the wear-indicative sound waves.

The controller 30 is constituted by a microcomputer or the like equipped with a CPU, and a storage unit composed of non-volatile physical storage media such as ROM, RAM, flash memory, or HDD. As shown in FIG. 10, the controller 30 of the present embodiment includes an amplification unit 31, a signal processing unit 32, a determination unit 33, and the like. It should be noted that CPU stands for Central Processing Unit, ROM stands for Read Only Memory, RAM stands for Random Access Memory, and HDD stands for Hard Disk Drive. Storage media such as ROM are non-transitory tangible storage media.

The amplification unit 31 is connected to the detector 10 and amplifies the detection signal detected by the detector 10. It should be noted that the amplification unit 31 may be connected to the detector 10 by wireless communication or by wired communication. In addition, the detection signal transmitted from the detector 10 is a signal based on processing sound waves and resonance sound waves. However, the detection signal also includes the influence of noise sound waves caused by ambient noise.

The signal processing unit 32 derives a determination signal indicating the intensity in a predetermined frequency band. In the present embodiment, the signal processing unit 32 is configured to include an FFT (Fast Fourier Transform) circuit for performing discrete Fourier transform at high speed, and a band-pass filter. It should be noted that the predetermined frequency band refers to a specific range that includes the natural frequency of the workpiece 200.

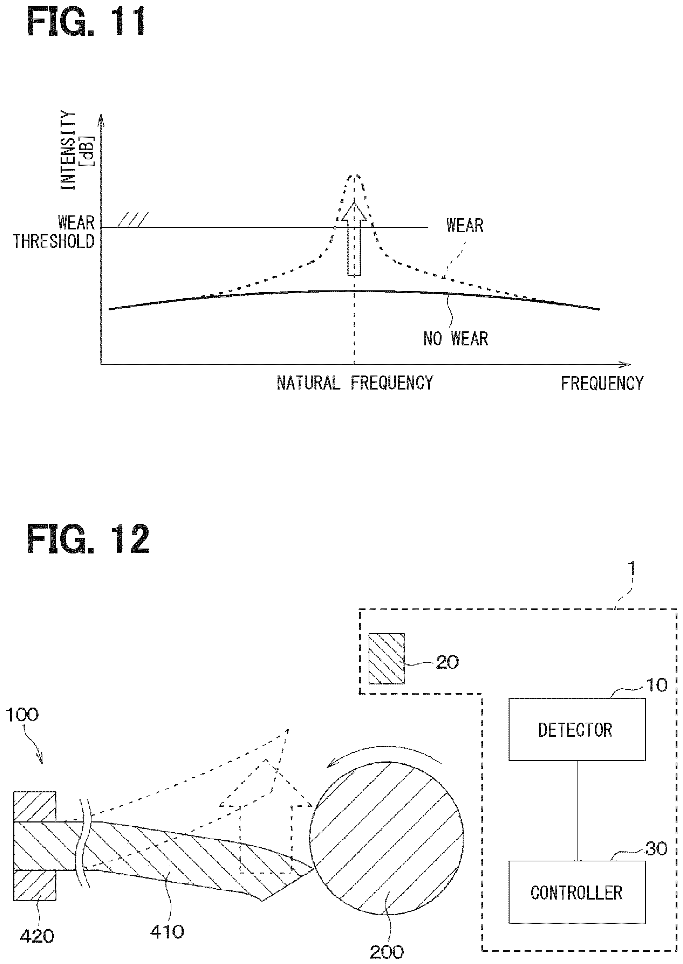

Upon receiving the determination signals derived by the signal processing unit 32, the determination unit 33 performs a wear determination, which is an abnormality determination for determining wear of the drill 140, by comparing the intensity of the determination signal to a wear threshold. Specifically, as shown in FIG. 11, when the drill 140 is worn, the determination signal at the natural frequency of the workpiece 200 equals or exceeds the wear threshold. In this case in the present embodiment, although details will be described later, when the drill 140 is worn, the workpiece 200 vibrates at its natural frequency, and the wear-indicative sound waves generated at this time cause the resonant unit 20 to resonate, thereby generating resonance sound waves. Thus, compared to the case where the resonant unit 20 is not provided, the intensity of the determination signal obtained when the drill 140 is worn can be increased. Accordingly, the influence of noise sound waves caused by background noise can be reduced, thereby suppressing erroneous wear determination of the drill 140.

In addition, in the present embodiment, when the determination unit 33 determines that the drill 140 is worn based on the wear determination, the determination unit 33 subsequently performs a breakage determination to determine whether the intensity of the determination signal is below a breakage threshold that is smaller than the wear threshold after the wear determination. Specifically, when the drill 140 is broken, friction between the drill 140 and the workpiece 200 decreases, resulting in a reduction of wear-indicative sound waves, and consequently, the intensity of the determination signal decreases. Thus, when the intensity of the determination signal falls below the breakage threshold, the determination unit 33 determines that the drill 140 is broken.

The determination unit 33 of the present embodiment is connected to a notification unit 40, which includes a display unit, an audio unit, or the like. When the determination unit 33 determines that an abnormality such as wear or breakage has occurred in the drill 140, the determination unit 33 transmits an abnormality signal indicating that an abnormality has occurred in the drill 140 to the notification unit 40. In this embodiment, when the determination unit 33 determines that the drill 140 is worn, the determination unit 33 transmits a wear abnormality signal to the notification unit 40. When the determination unit 33 determines that the drill 140 is broken, the determination unit transmits a breakage abnormality signal to the notification unit 40. The notification unit 40 then notifies an operator that an abnormality has occurred in the drill 140 by providing a notification corresponding to the content of the abnormality signal.

The determination unit 33 may operate independently of the numerical control device (i.e., NC device) that is generally provided in the machine tool 100. The determination unit 33 may be configured to transmit the abnormality signal to the numerical control device. When the determination unit 33 transmits the abnormality signal to the numerical control device, the numerical control device may reset parameters such as the set movement direction or movement amount based on the wear of the drill 140.

The above describes the configuration of the tool abnormality detection system 1 according to the present embodiment. Next, an abnormality detection method using the above-mentioned tool abnormality detection system 1 will be described. In the present embodiment, as described above, an abnormality detection method during drilling of the workpiece 200 using the drill 140 will be explained.

First, when performing drilling on the workpiece 200, the workpiece 200 is fixed in the vise 120, and the spindle holder 130 is rotated and displaced downward to press the drill 140 against the workpiece 200, thereby forming a hole 201 in the workpiece 200. As drilling continues and the tip of the drill 140 becomes worn, contact friction between the tip of the drill 140 and the workpiece 200 increases at the bottom of the hole 201, resulting in an increase in cutting resistance.

When contact friction increases, it becomes difficult for the spindle holder 130, which rotates and moves the drill 140 downward, to operate properly. As a result, the spindle holder 130 undergoes slight vibrations, causing the drill 140 to rub against the side wall of the hole 201 as well. When the drill 140 rubs against the side wall of the hole 201, the workpiece 200 begins to undergo free vibration caused by its natural frequency. In other words, when the drill 140 becomes worn, wear-indicative sound waves are generated from the workpiece 200 as a result of the wear of the drill 140.

In this embodiment, as described above, the resonant unit 20 having the same natural frequency as the workpiece 200 is arranged near the workpiece 200. Thus, the resonant unit 20 generates a resonant sound wave in response to the wear-indicative sound wave.

The detector 10 detects sound waves and outputs detection signals. Specifically, when the drill 140 is not worn, the detector 10 detects direct sound waves and noise sound waves. When the drill 140 is worn, the detector 10 detects, in addition to direct sound waves and noise sound waves, wear-indicative sound waves and resonant sound waves, and transmits detection signals.

Then, the determination unit 33 compares the intensity of the determination signal based on the detection signal to a wear threshold, and determines whether the drill 140 is worn. In this case, when the drill 140 is worn, the detector 10 detects not only the wear-indicative sound wave but also the resonant sound wave. Thus, when the drill 140 is worn, the intensity of the determination signal becomes higher compared to the case where the resonant unit 20 is not provided. Accordingly, the influence of noise sound waves can be reduced. In addition, when the determination unit 33 determines that the drill 140 is worn, the determination unit 33 performs a breakage determination by comparing the intensity of the determination signal to a breakage threshold.

The above is the abnormality detection method according to the present embodiment. Next, the operation executed by the controller 30 will be described with reference to FIG. 4 explained in the first embodiment above. The controller 30 may execute the following operations when machining of the workpiece 200 is started.

First, in step S101, the controller 30 receives a detection signal from the detector 10 and generates a determination signal. Then, in step S102, the controller 30 determines whether a wear abnormal signal has been transmitted. In other words, the controller 30 determines whether the controller 30 has already determined that the drill 140 is worn. When the controller 30 determines that a wear abnormal signal has been transmitted (that is, step S102: YES), the controller 30 proceeds to the processing from step S105 onward, which will be described later.

When, in step S102, the controller 30 determines that a wear abnormal signal has not been transmitted yet (that is, step S102: NO), the controller 30, in step S103, determines whether the intensity of the determination signal is equal to or greater than the wear threshold.

When the controller 30 determines that the intensity of the determination signal is less than the wear threshold (that is, step S103: NO), the controller 30 concludes that the drill 140 is not worn and terminates the process. In contrast, when the controller 30 determines that the intensity of the determination signal is equal to or greater than the wear threshold (that is, step S103: YES), the controller 30 transmits a wear abnormal signal to the notification unit 40 in step S104. As a result, the notification unit 40 performs processing to notify the operator that wear has occurred in the drill 140.

After transmitting the wear abnormal signal in step S104, or when it is determined in step S102 that the wear abnormal signal has been transmitted (that is, step S102: YES), the controller 30 determines in step S105 whether the intensity of the determination signal is equal to or less than the breakage threshold. When the controller 30 determines that the intensity of the determination signal is equal to or less than the breakage threshold (that is, step S105: YES), the controller determines that the drill 140 is broken and transmits a breakage abnormality signal to the notification unit 40. As a result, the notification unit 40 performs processing to notify the operator that breakage has occurred in the drill 140. In contrast, when the controller 30 determines that the intensity of the determination signal is greater than the breakage threshold (that is, step S105: NO), the process is terminated.

According to the present embodiment described above, a resonant unit 20 capable of resonating with wear-indicative sound waves is provided, and the determination signal is generated based on the wear-indicative sound waves and the resonant sound waves. Thus, the intensity of the determination signal can be increased and the influence of noise sound waves can be reduced, thereby suppressing erroneous determinations. Furthermore, since the tool abnormality detection system 1 of the present embodiment can suppress erroneous determinations by increasing the intensity of the determination signal through resonant sound waves, the tool abnormality detection system 1 can be applied even when the diameter of the hole 201 is small or when the wear-indicative sound waves are weak due to the material of the workpiece 200.

### (Modification of the Fifth Embodiment)

A modification of the fifth embodiment described above will be explained. In the above fifth embodiment, an example is described in which, after the controller 30 sends a wear abnormality signal in step S104, the controller 30 performs the processing from step S105 onward. However, the controller 30 may be configured to perform the processing from step S105 onward after the wear abnormality signals have been transmitted multiple times.

### (Sixth Embodiment)

The sixth embodiment will be described. In this embodiment, compared to the fifth embodiment, abnormality detection of the tool is performed during turning, which is a type of cutting process. Other aspects are the same as in the fifth embodiment, and thus a detailed description will be omitted here.

The tool abnormality detection system 1 of the present embodiment is configured to detect abnormalities in a tool used for turning, which is a type of cutting process. Accordingly, as shown in FIG. 12, the machine tool 100 of this embodiment is provided with a cutting tool 410, which serves as a tool for turning processing of the workpiece 200 and a vise 420 for holding the cutting tool 410. The cutting tool 410 is rod-shaped, with one end formed as a cutting edge, and the opposite end fixed by the vise 420.

Specifically, as will be described later, in this embodiment, when the cutting edge of the cutting tool 410 becomes worn, the cutting tool 410 vibrates at its natural frequency, generating a wear-indicative sound wave. Thus, the detector 10 is arranged near the cutting tool 410. It should be noted that FIG. 12 shows the state in which the cutting tool 410 is worn and vibrating.

The resonant unit 20 is arranged at a position where the resonant unit 20 can resonate with the wear-indicative sound wave, as in the first embodiment described above. For example, the resonant unit 20 is arranged near the workpiece 200, but it may also be disposed inside the cutting tool 410 or the vise 420.

The cutting tool 410 vibrates at its natural frequency when the cutting tool 410 is worn as described above. In this embodiment, the resonant unit 20 is made of a material having the same natural frequency as the cutting tool 410. For example, as the resonant unit 20, an unused cutting tool 410 identical to the cutting tool 410 fixed to the vise 420 may be used as is.

The controller 30, as in the first embodiment, compares the determination signal to the wear threshold to determine wear. In addition, the controller 30 compares the determination signal to the breakage threshold to determine breakage. However, the controller 30 (that is, the signal processing unit 32) of this embodiment derives, as the determination signal in a predetermined frequency band, a determination signal within a predetermined range that includes the natural frequency of the cutting tool 410.

The above describes the configuration of the tool abnormality detection system 1 according to the present embodiment. Next, an abnormality detection method using the above-mentioned tool abnormality detection system 1 will be described. In this embodiment, as described above, the abnormality detection method during turning of the workpiece 200 using the cutting tool 410 will be explained.

First, during turning processing, the rotating workpiece 200 is brought into contact with the cutting tool 410 to shape the workpiece 200 into the desired form. In this case, as turning processing continues and the cutting edge of the cutting tool 410 becomes worn, the contact friction between the cutting edge and the workpiece 200 increases, resulting in higher turning resistance. Then, when the force balance between the cutting tool 410 and the workpiece 200 is lost and the relative velocity becomes zero, the cutting tool 410 undergoes a stick-slip phenomenon. Then, the cutting tool 410 starts freely vibrating due to its natural vibration with spring force generated when the cutting tool 410 returns to its original position. In other words, when the cutting tool 410 becomes worn, a wear-indicative sound wave is generated from the cutting tool 410. In this embodiment, as described above, the resonant unit 20 having the same natural frequency as the cutting tool 410 is arranged near the workpiece 200. Thus, the resonant unit 20 generates resonant sound waves by resonating with the wear-indicative sound waves.

It should be noted that the stick-slip phenomenon refers to an intermittent motion that occurs when two contacting objects slide against each other, where instead of a continuous smooth sliding motion, sliding and sticking alternately take place.

The detector 10 detects direct sound waves and noise sound waves when the cutting tool 410 is not worn, and the detector 10 detects the wear-indicative sound waves in addition to the direct sound waves and noise sound waves when the cutting tool 410 is worn, and transmits detection signals accordingly.

Then, as in the first embodiment described above, the controller 30 determines abnormalities of the cutting tool 410 by comparing the intensity of the determination signal based on the detection signal with the wear threshold and the damage threshold.

According to the present embodiment described above, since the resonant unit 20 that resonates with the wear-indicative waves is provided, it is possible to obtain the same effects as in the first embodiment.

### (Seventh Embodiment)

The seventh embodiment will be described. In this embodiment, multiple resonant units 20 are arranged, as compared to the fifth embodiment. Other aspects are the same as in the fifth embodiment, and thus a detailed description will be omitted here.

First, when drilling is performed on the workpiece 200 as in the fifth embodiment, the mass of the workpiece 200 may change due to the drilling process, which may in turn change the natural frequency of the workpiece 200. In other words, the wear sound waves generated from the workpiece 200 when the drill 140 becomes worn may vary depending on the circumstances. In particular, when forming multiple holes 201 or a large hole 201, the change in the mass of the workpiece 200 becomes significant, making it easier for the natural frequency of the workpiece 200 to change.

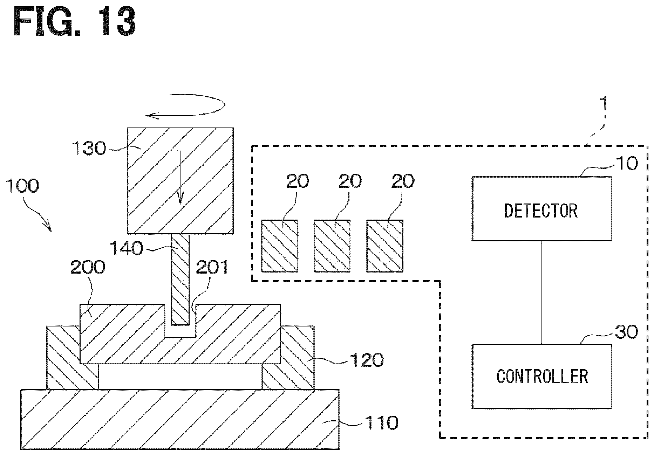

Thus, in the present embodiment, as shown in FIG. 13, multiple resonant units 20 are provided. Specifically, each resonant unit 20 is set to have a different natural frequency. However, each resonant unit 20 is set to have a natural frequency corresponding to the natural frequency of the workpiece 200, which changes as holes are drilled into the workpiece 200. In other words, each resonant unit 20 has a natural frequency that falls within the range of wear-indicative sound waves that may be generated according to the condition of the workpiece 200.

The above describes the configuration of the tool abnormality detection system 1 according to the present embodiment. Next, a method for detecting abnormalities using the above-described tool abnormality detection system will be explained.

As in the first embodiment described above, when the drill 140 is worn, wear-indicative sound waves caused by the wear of the drill 140 are generated from the workpiece 200. In this case, the frequency of the wear-indicative sound waves changes depending on the mass of the workpiece 200. However, in the present embodiment, multiple resonant units 20 are provided, and each resonant unit 20 has a natural frequency different from each other. Thus, it is possible to suppress the occurrence of a problem in which no resonant sound wave corresponding to the wear-indicative sound wave is generated.

According to the present embodiment described above, since the resonant unit 20 that resonates with the wear-indicative sound waves is provided, it is possible to obtain the same effects as in the first embodiment.
(1) In the present embodiment, multiple resonant units 20 are arranged, and the natural frequency of each resonant unit 20 is set to a different value. Thus, it is possible to suppress the occurrence of a problem in which no resonant sound wave corresponding to the wear-indicative sound wave is generated.

### (Eighth Embodiment)

The eighth embodiment will be described. The present embodiment differs from the fifth embodiment in that the configuration of the controller 30 has been modified. Other aspects are the same as in the fifth embodiment, and thus a detailed description will be omitted here. In this embodiment, the description will focus on the wear determination as in the fifth embodiment. However, it is also possible to perform breakage determination.

The controller 30 of this embodiment determines the wear of the drill 140 using self-learning of the abnormality detection system in JP 2020-129233 A which has been already filed by the present applicant.

The controller 30 of the present embodiment has the same configuration as that of the third embodiment and, as shown in FIG. 6, includes a signal acquisition unit 301, a learning data storage unit 302, a monitoring data storage unit 303, a state observer generation unit 304, a state observer information storage unit 305, a normal model generation unit 306, a normal model parameter storage unit 307, an abnormality degree calculation unit 308, a determination unit 309, and a cause analysis unit 310.

The signal acquisition unit 301 acquires learning data and monitoring data. In this embodiment, the detection signal based on the sound waves detected by the detector 10 is acquired as the monitoring data and learning data.

It is also possible to acquire the learning data not from the detection signal, but by downloading the learning data from a database storing reference values. Furthermore, in this embodiment, the monitoring data may be any data to be monitored, regardless of whether the monitoring data is used for other purposes. The monitoring data may be used as learning data. In addition, in this embodiment, the learning data may be any data used for learning, and it is optional whether the learning data is used for other purposes.

The learning data storage unit 302 stores the learning data acquired by the signal acquisition unit 301. The stored learning data is then input to the normal model generation unit 306, which will be described later.

The monitoring data storage unit 303 stores the monitoring data acquired by the signal acquisition unit 301. The stored monitoring data is then input to the abnormality degree calculation unit 308, which will be described later.

It is assumed that the learning data storage unit 302 and the monitoring data storage unit 303 are configured using an HDD, flash memory, or the like, but they may also be configured using RAM or the like. Furthermore, the learning data storage unit 302 and the monitoring data storage unit 303 may be implemented using volatile memory or non-volatile memory.

The state observer generation unit 304 generates a state observer using the variables included in the input variable configuration. It should be noted that the state observer is a value that includes predetermined coefficients generated by linearly combining the variables included in the input variable configuration according to a preset formula. It is also preferable that the state observer reflects the condition of the drill 140, for which abnormalities are detected by the tool abnormality detection system 1, and more preferably, the state observer reflects the wear of the drill 140. In this embodiment, the variables refer to the variables corresponding to the learning data and monitoring data acquired by the signal acquisition unit 301, and the variable configuration refers to a single variable or a combination of multiple variables.

The state observer information storage unit 305 stores the coefficients of the state observer obtained by the state observer generation unit 304. In addition, the variable configuration used to generate the state observer is also stored at the same time.

It should be noted that the state observer generation unit 304 only needs to be provided when generating the state observer. That is, after the state observer generation unit 304 has generated the state observer and stored the variable configuration and coefficients of the state observer in the state observer information storage unit 305, the state observer generation unit 304 may be disconnected from the controller 30.

The normal model generation unit 306 derives a first state observation value by inputting the learning data into the state observer. In the present embodiment, the variable configuration and coefficients of the state observer are read from the state observer information storage unit 305, and the first state observation value is obtained by applying the learning data, which is read from the learning data storage unit 302, to the variables. Then, the normal model generation unit 306 generates a normal model by combining the derived first state observation value and the learning data, and inputting them into a competitive neural network (i.e., NN). For example, in the present embodiment, the material of the drill 140, the diameter of the hole, and the like are input as learning data into the competitive neural network (NN).

It should be noted that, as initial values given to the competitive neural network, for example, when there are multiple combinations of attributes of the input data, such as measurement season or time of day, it is desirable that the sampling be performed evenly or randomly. As a result, the convergence of the neuron weight vectors during learning in the competitive neural network can be accelerated on the map.

Here, the competitive neural network is a network including only an input layer and an output layer. The competitive neural network is composed of multiple input layer neurons and multiple output layer neurons that are fully connected to the input layer neurons.

Then, the normal model generation unit 306 calculates an abnormality degree, which is the difference between the learning data and the first state observation value, which are input to the competitive neural network, and the neuron weight data of the winner unit, and determines a wear threshold using the set of differences. For example, a constant multiple of the 99.9th percentile of the set of differences (i.e., absolute values) is used as the wear threshold.

The normal model parameter storage unit 307 stores the wear threshold determined by the normal model generation unit 306.

The abnormality degree calculation unit 308 derives a second state observation value by inputting the monitoring data into the state observer. In this embodiment, the second state observation value is obtained by reading the variable configuration and coefficients of the state observer from the state observer information storage unit 305 and substituting the monitoring data, read from the monitoring data storage unit 303, into these variables. Then, the abnormality degree calculation unit 308 calculates the abnormality degree by combining the derived second state observation value and the monitoring data, inputting them into a competitive neural network (i.e., NN), and using the weight data of the output layer neurons. For example, in this embodiment, material of the drill 140, diameter of the hole may be input into the competitive neural network (NN) as monitoring data.

The determination unit 309 performs wear determination by comparing the wear threshold read from the normal model parameter storage unit 307 with the abnormality degree output from the abnormality degree calculation unit 308. Specifically, when the abnormality degree is equal to or greater than the wear threshold, it is determined that the drill 140 is worn. When the abnormality degree is less than the wear threshold, it is determined that there is no wear.

When the determination result of the determination unit 309 indicates wear, the cause analysis unit 310 identifies the cause of the wear using the second state observation values and monitoring data that led to the determination of the wear. In this case, the cause analysis unit 310 may identify the cause of the abnormality by using the second state observation values and monitoring data that are obtained earlier and/or later than the second state observation values and monitoring data that led to the determination of the wear as the reference.

According to the present embodiment described above, since the resonant unit 20 that resonates with the wear-indicative waves is provided, it is possible to obtain the same effects as in the first embodiment.
(1) As in the present embodiment, the controller 30 may perform wear determination of the drill 140 while self-learning. Accordingly, since wear determination can be performed in accordance with the situation, further suppression of erroneous determinations can be expected.

### (Other Embodiments)

Although the present disclosure has been described in accordance with the embodiments, it is understood that the present disclosure is not limited to such embodiments or structures. The present disclosure encompasses various modifications and variations within the scope of equivalents. In addition, various combinations and forms, as well as other combinations and forms that include only one element, more than one element, or fewer elements, are also within the sprit and the scope of the present disclosure.

For example, in the above first, second, and fourth embodiments, both wear determination and breakage determination are performed. However, it is also possible to perform only wear determination.

In addition, in the above first, third, and fourth embodiments, the drill 140 is described as a tool, while in the above second embodiment, the cutting tool 410 is described as a tool. However, the tool can be changed as appropriate, and may be an end mill or a grinding wheel. Furthermore, the tool may be a component that undergoes wear or abrasion (i.e., a sliding component), and may be a bearing, roller, gear, slide rail, and mold.

Furthermore, in the above first to fourth embodiments, the time variation of the wear-indicative sound waves in the fundamental frequency band and in the frequency band at twice the fundamental frequency band may be as shown in FIG. 8. That is, as shown in FIG. 8, when the drill 140 or the cutting tool 410 is worn, the wear-indicative sound waves increase compared to when the condition is normal. Thus, for example, when it is determined in step S103 that the determination signal is equal to or greater than the wear threshold, it may be configured to determine whether the determination signal from a predetermined period earlier is equal to or less than the wear threshold. As a result, the wear determination of the drill 140 or cutting tool 410 can be performed with even higher accuracy.

Furthermore, the above embodiments may also be combined. For example, the above-described fourth embodiment may be combined with the second and third embodiments so that the Nyquist frequency is included within the range of the frequency bands determined by the determination unit 33.

In the fifth to seventh embodiments described above, both wear determination and breakage determination are performed. However, it is also possible to perform only wear determination.

Furthermore, in the above-described fifth, seventh, and eighth embodiments, the drill 140 is described as a tool, while in the sixth embodiment, the cutting tool 410 is described as a tool. However, the tool may be changed as appropriate, and may be an end mill or a grinding wheel. Furthermore, the tool may be a component that undergoes wear or abrasion (i.e., a sliding component), such as a bearing, roller, gear, slide rail, or mold.

Furthermore, the above embodiments may also be combined. For example, the seventh embodiment described above may be combined with the sixth and eighth embodiments, so that multiple resonant units 20 having different natural frequencies may be provided.

The controller and the method described in the present disclosure may be implemented by a special purpose computer which is configured with a memory and a processor programmed to execute one or more particular functions embodied in computer programs of the memory. Alternatively, the controller and the method described in the present disclosure may be implemented by a special purpose computer configured as a processor with one or more special purpose hardware logic circuits. Alternatively, the controller and the method described in the present disclosure may be implemented by one or more special purpose computer, which is configured as a combination of a processor and a memory, which are programmed to perform one or more functions, and a processor which is configured with one or more hardware logic circuits. The computer programs may be stored, as instructions to be executed by a computer, in a tangible non-transitory computer-readable medium.

### [Disclosure of the present invention]

The present disclosure described above can be recognized as the following aspects, for example.

### [First Aspect]

A tool abnormality detection system includes a detector (10), and a controller (30). The detector is configured to detect a sound wave generated in processing a workpiece (200) with a tool (140, 410) and output a detection signal based on the sound wave. The controller is configured to determine whether the tool is worn based on the detection signal. The controller is further configured to generate, based on the detection signal, determination signals indicating intensities in respective frequency bands: a fundamental frequency band of a wear-indicative sound wave; and a higher frequency band that is higher than the fundamental frequency band. The wear-indicative sound wave is generated when the tool is worn. The controller is configured to determine whether the tool is worn by comparing each of the determination signals to its respective wear threshold which is set for the respective frequency bands.

### [Second Aspect]

The second aspect is the tool abnormality detection system according to first aspect, and the higher frequency band is an integer multiple of two or more of the fundamental frequency band.

### [Third Aspect]

The third aspect is the tool abnormality detection system according to first or second aspect, and the higher frequency band is one of higher frequency bands. The detector is configured to output analog signals as the detection signal. The controller includes an AD converter (34) that is configured to convert the analog signals to digital signals and that has sampling frequency higher than a highest frequency band which is highest in frequency among the higher frequency bands for which the determination signals are generated. When a Nyquist frequency is defined as half the sampling frequency, the Nyquist frequency is included within a range between the fundamental frequency band and the highest frequency band. The controller is configured to generate the determination signals in a frequency range under the Nyquist frequency based on the digital signals generated by the AD converter.

### [Fourth Aspect]

The fourth aspect is the tool abnormality detection system according to any one of first to third aspects, and the controller is configured to determine whether the tool is broken by comparing intensity of each of the detection signals to its respective breakage threshold which is lower than the wear threshold upon determining that the tool is worn.

### [Fifth Aspect]

The fifth aspect is a tool abnormality detection system including a detector (10), a controller (30), and a resonant unit (20). The detector is configured to detect a sound wave generated in processing a workpiece (200) with a tool (140, 410) and output a detection signal based on the sound wave. The controller is configured to determine whether the tool is worn based on the detection signal. The resonant unit is configured to generate a resonant sound wave by resonating with a wear-indicative sound wave which is generated when the tool is worn. The detector is configured to detect the resonant sound wave generated by the resonant unit. The controller is configured to compare an intensity of a determination signal based on the sound wave detected by the detector to a wear threshold, and determine that the tool is worn upon determining that the intensity of the determination signal is equal to more than the wear threshold.

### [Sixth Aspect]

The sixth aspect is the tool abnormality detection system according to the fifth aspect, and the controller is configured to compare the intensity of the detection signal to a breakage threshold that is less than the wear threshold upon determining that the tool is worn, and determine that the tool is broken upon determining that the intensity of the determination signal is equal to or less than the breakage threshold.

### [Seventh Aspect]

The seventh aspect is the tool abnormality detection system according to the fifth or sixth aspect, and the resonant unit is one of resonant units having different natural frequencies from each other. The different natural frequencies are included within a range of the wear-indicative sound wave generated depending on condition of the workpiece.

## Claims

1. A tool abnormality detection system comprising:
a detector (10) configured to detect a sound wave generated in processing a workpiece (200) with a tool (140, 410) and output detection signals based on the sound wave; and
a controller (30) configured to determine whether the tool is worn based on the detection signal, wherein
the controller is configured to:
generate, based on the detection signals, determination signals indicating intensities in respective frequency bands: a fundamental frequency band of a wear-indicative sound wave; and a higher frequency band that is higher than the fundamental frequency band, the wear-indicative sound wave being generated when the tool is worn, and
determine whether the tool is worn by comparing each of the determination signals to its respective wear threshold which is set for the respective frequency bands.

2. The tool abnormality detection system according to claim 1, wherein
the higher frequency band is an integer multiple of two or more of the fundamental frequency band.

3. The tool abnormality detection system according to claim 1, wherein
the higher frequency band is one of higher frequency bands,
the detector is configured to output analog signals as the detection signals,
the controller includes an AD converter (34) configured to convert the analog signals to digital signals,
a sampling frequency of the AD converter is higher than a highest frequency band which is highest in frequency among the higher frequency bands for which the determination signals are generated,
when a Nyquist frequency is defined as half the sampling frequency, the Nyquist frequency is included within a range between the fundamental frequency band and the highest frequency band, and
the controller is configured to generate the determination signals in a frequency range under the Nyquist frequency based on the digital signals generated by the AD converter.

4. The tool abnormality detection system according to any one of claims 1 to 3, wherein
the controller is configured to determine whether the tool is broken by comparing intensity of each of the detection signals to its respective breakage threshold which is lower than the wear threshold upon determining that the tool is worn.

5. A tool abnormality detection system comprising:
a detector (10) configured to detect a sound wave generated in processing a workpiece (200) with a tool (140, 410) and output a detection signal based on the sound wave;
a controller (30) configured to determine whether the tool is worn based on the detection signal; and
a resonant unit (20) configured to generate a resonant sound wave by resonating with a wear-indicative sound wave which is generated when the tool is worn, wherein
the detector is configured to detect the resonant sound wave generated by the resonant unit,
the controller is configured to:
compare an intensity of a determination signal based on the sound wave detected by the detector to a wear threshold; and
determine that the tool is worn upon determining that the intensity of the determination signal is equal to or more than the wear threshold.

6. The tool abnormality detection system according to claim 5, wherein
the controller is configured to:
compare the intensity of the detection signal to a breakage threshold that is less than the wear threshold upon determining that the tool is worn; and
determine that the tool is broken upon determining that the intensity of the determination signal is equal to or less than the breakage threshold.

7. The tool abnormality detection system according to claim 5 or 6, wherein
the resonant unit is one of resonant units having different natural frequencies from each other, and
the different natural frequencies are included within a range of the wear-indicative sound wave generated depending on condition of the workpiece.
